Europäisches Patentamt

European Patent Office

Office européen des brevets

(11) Veröffentlichungsnummer: **0 261 547**

**A2**

(12) **EUROPÄISCHE PATENTANMELDUNG**

(21) Anmeldenummer: 87113426.8

(51) Int. Cl.⁴: **B23H 7/02**

(22) Anmeldetag: 10.09.87

(30) Priorität: 24.09.86 DE 3632347

(43) Veröffentlichungstag der Anmeldung:
30.03.88 Patentblatt 88/13

(84) Benannte Vertragsstaaten:
CH DE ES FR IT LI

(71) Anmelder: **Schiess Aktiengesellschaft**
**Geschäftsbereich Nassovia**
**Nassoviastrasse 2 Postfach 12 20**
**D-6070 Langen (Hessen)(DE)**

(72) Erfinder: **Dietz, Volker**
**Meisenweg 4**
**D-6304 Pohlheim(DE)**
Erfinder: **Grether, Hans, Dipl.-Ing.**
**Gartenstrasse 51**
**D-6070 Langen Hessen(DE)**
Erfinder: **Töpfer, Klaus-Dieter**
**Espenloh 34**
**D-6081 Worfelden(DE)**

(74) Vertreter: **Allgeier, Kurt**
**Friedrichstrasse 24**
**D-7888 Rheinfelden(DE)**

(54) **Funkenerosionsmaschine für das Drahterodieren.**

(57) Funkenerosionsmaschine für das Drahterodieren
mit einer oberen Drahtzuführung und einer unteren
Drahtabführung, beide in horizontaler Ebene in zwei
Koordinaten relativ zu dem Maschinenbett und/oder
auf diesem verfahrbar angeordneten Aufspanntisch-
und/oder Werkstückauflage-Elementen verschiebbar,
bei der die untere Drahtabführung (37,38,39) gegenüber dem Maschinenbett (1) und/oder auf diesem starr oder verfahrbar angeordneten Aufspanntisch (30) und/oder Werkstückauflage-Elementen
(24,25,28,31) in vertikaler Richtung veschiebbar ist.
Dabei ist der horizontal verlaufende Teil des
Drahtführungsschachts (39) der unteren Drahtabführung (37,38) in einer mit dem die obere Drahtzuführungsdüse (36) tragenden Querschlitten (33)
starr verbundenen Schlittenführung (41) vertikal verschiebbar gelagert und einen Durchbruch (27,40,43)
im Maschinenbett (1) oder im Aufspanntisch (30)
oder in einem der Werkstückauflage-Elemente
(25,28,31) durchdringend mit seiner Drahtabführungsdüse (37) auf einen geringstmöglichen
Abstand (a) zur Bearbeitungsunterkante (20) des
Werkstücks (W) einstellbar.

Fig. 4

## Funkenerosionsmaschine für das Drahterodieren

Die Erfindung betrifft eine Funkenerosionsmaschine für das Drahterodieren mit einer oberen Drahtzuführung und einer unteren Drahtabführung, beide in horizontaler Ebene in zwei Koordinaten relativ zu dem Maschinenbett und/oder auf diesem verfahrbar angeordneten Aufspanntisch-und/oder Werkstückauflage-Elementen verschiebbar.

Bei derartigen bekannten Maschinen besteht das Bedürfnis, die durch den Werkstückwechsel verursachten Arbeitsunterbrechungen der Maschine zu verkürzen. Dies erfordert, den Werkstückwechsel zu beschleunigen. Bei Werkzeugmaschinen anderer Art und auch bei Senkerodiermaschinen wurde bereits vorgeschlagen, die Werkstücke auf Paletten aufzuspannen und auf diese Weise zur Bearbeitung vorzubereiten, so daß zum Werkstückwechsel nur die Palette mit dem fertigbearbeiteten Werkstück aus dem Bearbeitungsbereich der Maschine entfernt und nach dem Zuführen der nächsten Palette mit dem vorbereitet aufgespannten Werkstück die Weiterbearbeitung nach nur kurzer Unterbrechung fortgesetzt werden kann.

Die Verwendung von Paletten bei der gattungsgemäßen Drahterodiermaschine stößt deshalb auf Schwierigkeiten, weil die untere Drahtabführungsdüse so angeordnet ist, daß ihre Mündung nur um einen äußerst geringes Maß (im Bereich von ca. 0,1 mm) unterhalb der Aufspanntisch-Ebene liegt, d.h., daß auch der Abstand zur Bearbeitungsunterkante des Werkstückes nicht größer sein darf. Dadurch verbietet sich bei dieser gattungsgemäßen Maschine die Verwendung von bei Werkzeugmaschinen üblichen Paletten.

Aus diesen Gegebenheiten leitet sich die Aufgabe der Erfindung dahingehend ab, die gattungsgemäße Drahterodiermaschine und im Zusammenhang damit entsprechende Paletten derart auszubilden, daß die bekannten Vorteile des Werkstückwechsels mittels Paletten nutzbar gemacht werden können.

Zur Lösung dieser Aufgabe führt bei einer gattungsgemäßen Funkenerosionsmaschine der Vorschlag, daß die untere Drahtabführung gegenüber dem Maschinenbett und/oder auf diesem starr oder verfahrbar angeordneten Aufspanntisch und/oder Werkstückauflage-Elementen in vertikaler Richtung verschiebbar ist. Dabei kann nach einem weiteren Merkmal der horizontal verlaufende Teil des Drahtführungsschacts der unteren Drahtabführung in einer mit dem die obere Drahtzuführungsdüse tragenden Querschlitten starr verbundenen Schlittenführung vertikal verschiebbar gelagert sein.

Diese Ausbildungsweise einer vertikalen Verschiebbarkeit der unteren Drahtabführung gestattet es beispielsweise, nach dem Aufschieben einer Palette in X-oder Y-Richtung auf den Aufspanntisch, die Drahtabführungsdüse innerhalb des Paletteninnenraumes nach oben bis unter die Bearbeitungsunterkante des Werkstücks zu führen und nach der Bearbeitung für die Dauer des Palettenwechsels wieder kurzzeitig nach unten und zwar unterhalb der Aufspanntisch-Oberfläche zurückzuziehen.

Zu diesem Zweck besteht ein weiteres Merkmal der Erfindung darin, daß der horizontal verlaufende Teil des Drahtführungsschachts der unteren Drahtabführung einen Durchbruch im Maschinenbett oder im Aufspanntisch oder in einem der Werkstückauflage-Elemente durchdringend mit siner Drahtabführungsdüse auf einen geringstmöglichen Abstand zur Bearbeitungsunterkante des Werkstücks einstellbar ist.

Daher ist vorgesehen, daß der Vertikalhub der unteren Drahtabführung um einen kleinen Betrang größer ist als die Höhe des als Palette ausgebildeten, auf den Aufspanntisch aufgesetzten Werkstückauflage-Elements. Durch diese Bemessung ist sichergestellt, daß bei unterhalb der Ebene der Aufspannfläche des Aufspanntisches oder eines sonstigen Werkstückauflage-Elements zurückgezogener unterer Drahtabführungsdüse Paletten aus jeder Richtung aufgeschoben werden können.

Ein weiteres Vorrichtungsmerkmal sieht vor, daß der horizontale Drahtführungsschact der unteren Drahtabführung einen Durchbruch im Maschinenbett durchdringt, dessen Höhe dem größten vertikalen Verstellhub und dessen Länge dem größten Verstellweg in der X-Achse entspricht. Diese Ausbildungsweise ermöglicht es, die Maschine für jede beliebige Art des Palettenwechsals auszubilden, unabhängig davon, ob auf dem Maschinenbett ein Kreuztisch, ein nur in einer Koordinate verfahrbarer Tisch oder ein feststehender Aufspanntisch aufgesetzt ist.

In Abwandlung hiervon kann die Vorrichtung auch in der Weise ausgebildet sein, daß der horizontale Drahtführungsschacht der unteren Drahtabführung einen waagrecht verlaufenden Druchbruch in der auf dem Maschinenbett mittels der Führungen verfahrbaren Vorschubeinheit durchdringt und in den Innenraum der auf diese aufgesetzten Palette mit dem Werkstück mit seiner Drahtführungsdüse hineinragt. Bei dieser Ayusbildungsweise können ebenfalls rundum geschlossene Paletten verwendet werden, oder aber solche, welche nach einem weiteren Merkmal in der die X-Achse schneidenden Stirnwandung einen Durchbruch für den Durchgang der Drahtführungsdüse beim Aufschieben in der X-Achse aufweisen.

Eine weitere Abwandlung sieht vor, daß der horizontale Drahtführungsschacht der unteren Drahtabführung einen waagrecht verlaufenden Durchbruch in der In X-Richtung verlaufenden Wandfläche einer auf den Aufspanntisch oder die Vorschubeinheit aufgesetzten Palette mit dem Werkstück durchdringt, die in ihrer Stirnfläche einen senkrechten Druchbruch oder in ihrer in X-Richtung verlaufenden Wandfläche einen senkrechten Durchbruch für das Durchtreten der unteren Drähtführungsdüse beim Aufschieben der Palette in X-oder Y-Richtung aufweist. Auch dadurch wird die Möglichkeit geschaffen, Paletten dieser Art in den beiden Koordinaten-Richtungen auf den Aufspanntisch oder die Vorschubeinheit aufzuschieben.

Der Aufspanntisch bzw. die Vorschubeinheit können in Weiterbildung der Erfindung derart ausgebildet sein, daß zwei oder mehr Paletten für Werkstücke aufgenommen werden können, die in Richtung der X-oder der Y-Achse aufschiebbar sind. Durch diese Ausgestaltung entfällt bei aufeinanderfolgender Bearbeitung auch die kurze Stillstandszeit für einen Palettenwechsel; vielmehr ist lediglich ein einprogrammierbarer Verstellhub in X-Richtung erforderlich, um nach dem Neu-Einfädeln des Schneiddrahtes mit der Bearbeitung des nächsten Werkstückes zu beginnen. Dabei können die Aufnahmeplätze für die Paletten vom Zubringer einer oder mehrerer Palettenwechselvorrichtungen zum Zu-und/oder Rückführen in X-oder Y-Richtung mit den Paletten beschickbar sein. Ferner ist es möglich, die Paletten-Aufnahmeplätze mittels mit Greifern versehenen Zu-und Abführungsvorrichtungen mit Paletten von oben zu beschicken.

Die erfindungsgemäße Ausbildungsweise ermöglicht eine volle Automatisierung der Werkstück-Zu-und Abführung mittels Paletten bei einer gattungsgemäßen Funkenersosionsmaschine, wobei Paletten verschiedener Bauhöhe und Gestaltung verwendetwerden können.

Anhand der in der Zeichnung dargestellten und im folgenden näher beschriebenen Ausführungsbeispiele werden weitere Merkmale und Besonderheiten zusätzlich erläutert.

Es zeigen

Fig. 1 die gattungsgemäße Drahterodiermaschine in Seitenansicht,

Fig. 2 die Maschine gem. Fig. 1 in Längsansicht,

Fig. 3 die Maschien gem. Fig. 1 in Draufsicht,

Fig. 4 einen Teil-Querschnitt des Ausschnitts "A" gem. Fig. 2,

Fig. 5 einen Teil-Querschnitt des Ausschnitts "A" = gem. Fig. 2 in abgewandelter Ausbildung,

Fig. 6 einen Teil-Querschnitt des Ausschnitts "A gem. Fig. 2 in einer weiteren Abwandlung,

Fig. 7 eine Palette gem. Fig. 5 in Draufsicht,

Fig. 8 eine Palette gem. Fig. 5 in anderer Ausführung,

Fig. 9 eine Drahterodiermaschine nach der Erfindung beim Beladen mit einem zweiten, palettierten Werkstück während des Erodierens,

Fig. 10 eine Drahterodiermaschine nach der Erfindung mit Beladung von mehreren palettierten Werkstücken für unbeaufsichtigten Betrieb,

Fig. 11 eine Drahterodiermaschine nach der Erfindung, eingerichtet für palettierte Werkstücke und automatischen Palettenwechsel.

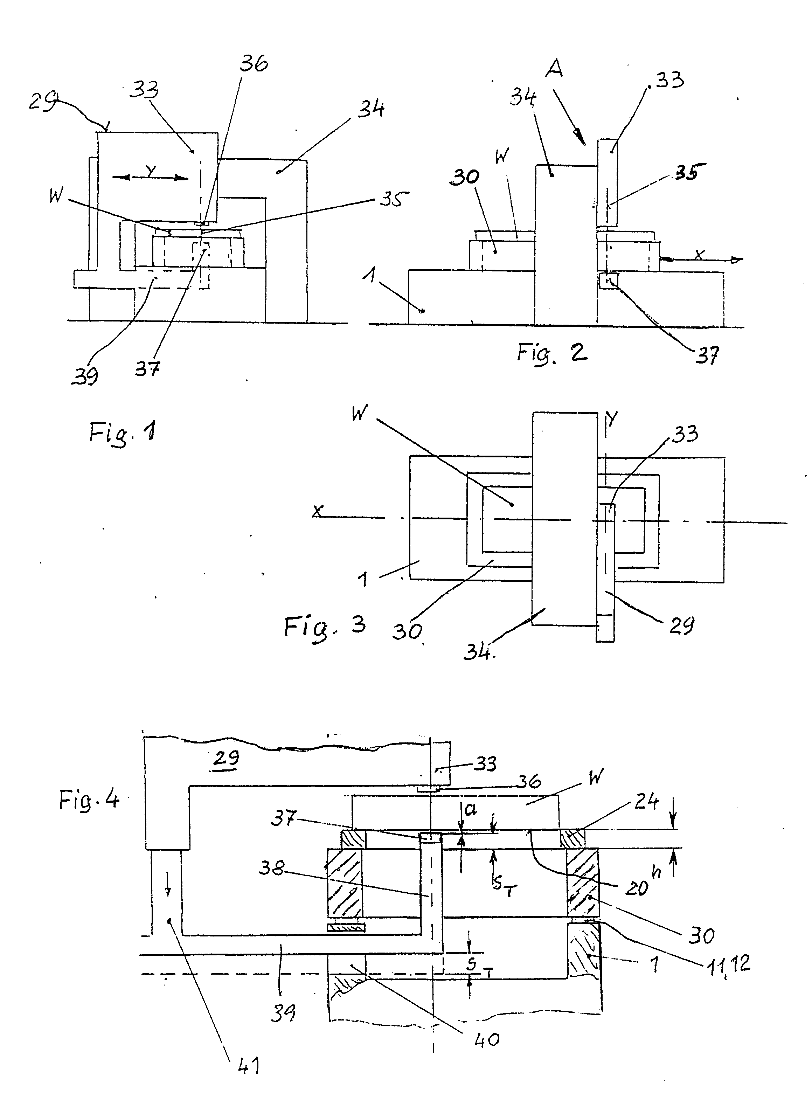

In den Figure 1 bis 10 ist das Maschinenbett mit 1, der Aufspanntisch mit 30, der Querschlitten mit 29 und die obere Drahtzuführung mit 33 bezeichnet. Der Schneiddraht 35 läuft aus der Drahtzuführungsdüse 36 aus und wird von der Drahtabführungsdüse 37 aufgenommen, von wo er über den Drahtführungsschact 38, 39 abgeführt wird. Der mit der oberen Drahtzuführung 33 versehene Querschlitten 29 ist im Ausführungsbeispiel an einem Portal 34 angeordnet; er kann auch an einem Ausleger angebracht sein. Das Werkstück ist jeweils mit W bezeichnet.

In den Darstellungen der Fig. 4 bis 6 sind verschiedene Ausbildungsweisen der Einführung der unteren Drahtabführung 37, 38, 39 unter das Werkstück W gezeigt. In Fig. 4 ist die Gestaltung gezeigt, bei welcher der horizontale Drahtführungsschacht 39 der unteren Drahtabführung 37, 38 einen Durchbruch 40 im Maschinenbett 1 durchdringt, dessen Höhe dem größten vertikalen Verstellhub $s_T$ und dessen Länge dem größten Verstellweg in der X-Achse entspricht. Bei dieser Ausbildungsweise ist es möglich, die untere Drahtabführungsdüse 37 unter die Oberkante des Aufspanntisches 30 zurückzuziehen und eine als Rahmen ausgebildete Palette 24 aus jeder beliebigen Richtung aufzuschieben. Daraufhin wird die untere Drahtzuführung 38, 39 vertikal nach oben bewegt, bis die untere Drahtabführungsdüse 37 den geringstmöglichen Abstand (a) zur Bearbeitungsunterkante 20 des Werkstücks W erreicht ist. Dabei ist der gesamte Vertikalhub der unteren Drahtabführung 37, 38, 39 um einen kleinen Betrag größer als die Höhe der Palette 24.

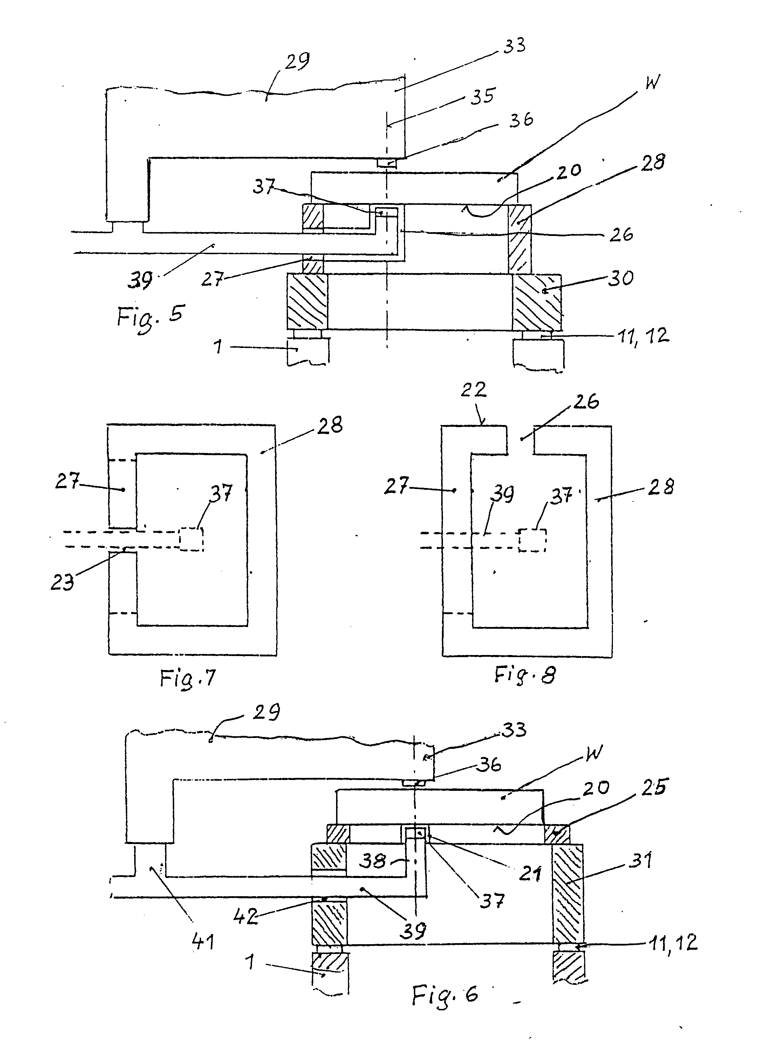

In Fig. 5 ist eine abgewandelte Ausbildsungsweise dargestellt, bei welcher der horizontale Drahtführungsschacht 39 der unteren Drahtführung 37, 38 einen waagrecht verlaufenden Durchbruch 27 in der in X-Richtung verlaufenden Wandfläche der Palette 28 durchdringt, die auf den in Tischführungsleisten 11 und Wälzlagerumlaufschuhen 12 in bekannter Weise in X-Richtung geführten Aufspanntisch 30 aufgesetzt ist. Dabei ist die Palette 28 in Fig. 7 mit in ihrer in X-Richtung verlaufenden Wandfläche mit einem senkrechten Durchbruch 23 versehen. Dadurch wird ein Aufschieben der Palette 28 in Richtung der Y-Achse .ermöglicht. Soll ein Aufschieben in Richtung der X-Achse erfolgen, so sind Paletten 28 mit einem senkrechten Durchbruch 26 in der Stirnfläche zu verwenden, wie in Fig. 8 dargestellt.

In abgewandelter Form ist es gem. Fig. 6 auch möglich, daß der horizontale Drahtführungsschacht 39 der unteren Drahtabführung 37, 38 einen waagrecht verlaufenden Durchbruch 42 in der auf dem Maschinenbett 1 mittels der erwähnten Führungen 11, 12 verfahrbaren Vorschubeinheit 31 durchdringt und in den Innenraum der Palette 25 hineinragt. In diesem Fall ist die Palette 25 nicht mit einem waagrecht verlaufenden Schlitz wie die Palette 28 versehen, sondern sie weist nur einen senkrechten Schlitz 21 in der Stirnwand auf, wie in Fig. 6 dargestellt. Diese Ausbildung ermöglicht das Aufschieben der Palette 25 in X-Richtung. Soll eine solche Palette in Y-Richtung aufgeschoben werden, so muß der Schlitz in der in X-Achse verlaufenden Seitenwand der Palette angebracht sein.

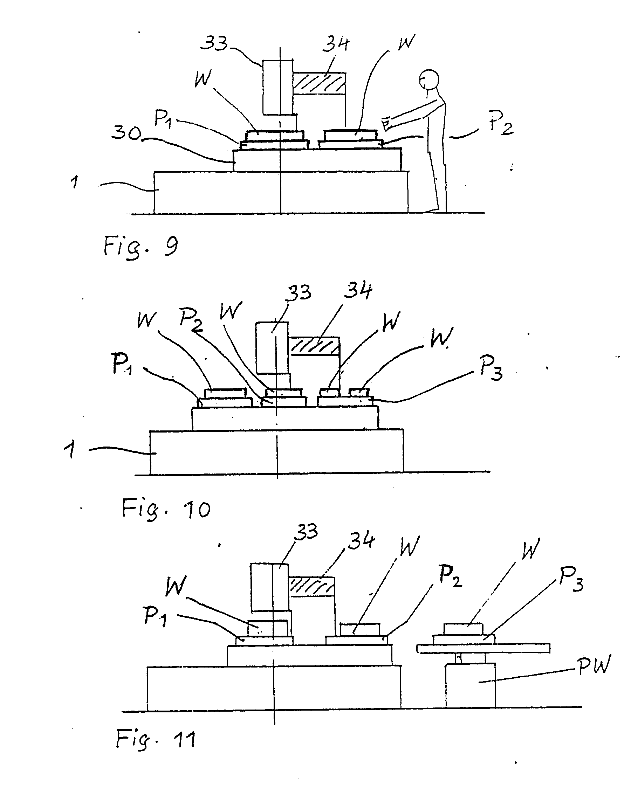

Die Arbeits-und Funktionsmöglichkeiten der nach diesen Grundmerkmalen ausgebildeten Funkenerosionsmaschine sind in den Fig. 9 bis 11 schematisch und beispielshaft veranschaulicht. Wie aus Fig. 9 ersichtlich ist, können auf dem in X-Achse verfahrbaren Aufspanntisch 30 zwei Aufnahmeplätze für die Paletten P$_1$ und P$_2$ vorgesehen sein, die je mit einem Werkstück W beschickt sind. Das Werkstück auf der Palette P$_1$ befindet sich in Bearbeitung, während das Werkstück auf der Palette P$_2$ zur Bearbeitung vorbereitet ist.

In Fig. 10 ist dargestellt, daß auch Werkstücke unterschiedlicher Art auf verschiedenen Paletten P$_1$ bis P$_3$ zugeführt werden können, die jeweils nach unterschiedlichen Programmen bearbeitet werden.

Ein Beispiel für eine unbediente Bearbeitungsfolge ist in Fig. 11 dargestellt. Während ein Werkstück W auf Palette P$_1$ in Bearbeitung ist, wurde ein weiteres Werkstück auf Palette P$_2$ bereits vorbereitet auf den Aufspanntisch geladen. Ein nicht dargestellter Roboter übernimmt nach der Bearbeitung Palette P$_1$ und verschiebt Palette P$_2$ in Bearbeitungsstellung auf dem Tisch. Der Zubringer der Palettenwechselvorrichtung PW setzt Palette P$_3$ auf dem Aufspanntisch und entnimmt einem nicht dargestellten Magazin eine vorbereitete neue Palette mit Werkstück.

## Ansprüche

1. Funkenerosionsmaschine für das Drahterodieren mit .einer oberen Drahtzuführung und einer unteren Drahtabführung, beide in horizontaler Ebene in zwei Koordinaten relativ zu dem Maschinenbett und/oder auf diesem verfahrbar angeordneten Aufspanntisch-und/oder Werkstückauflage-Elementen verschiebbar, dadurch gekennzeichnet, daß die untere Drahtabführung (37,38,39) gegenüber dem Maschinenbett (1) und/oder auf diesem starr oder verfahrbar angeordneten Aufspanntisch (30) und/oder Werkstückauflage-Elementen (24,25,28,31) in vertikaler Richtung verschiebbar ist.

2. Funkenerosionsmaschine nach Anspruch 1, dadurch gekennzeichnet, daß der horizontal verlaufende Teil des Drahtführungsschachts (39) der unteren Drahtabführung (37,38) in einer mit dem die obere Drahtzuführungsdüse (36) tragenden Querschlitten (33) starr verbundenen Schlittenführung (41) vertikal verschiebbar gelagert ist.

3. Funkenerosionsmaschine nach Anspruch 1, dadurch gekennzeichnet, daß der horizontal verlaufende Teil des Drahtführungsschachts (39) der unteren Drahtabführung (37,38) einen Druchbruch (27,40,43) im Maschinenbett (1) oder im Aufspanntisch (30) oder in einem der Werkstückauflage-Elemente (25,28,31) durchdringend mit seiner Drahtabführungsdüse (37) auf einen geringstmöglichen Abstand (a) zur Bearbeitungsunterkante (20) des Werkstücks (W) einstellbar ist.

4. Funkenerosionsmaschine nach einem der Ansprüche 1 bis 3, dadurch gekennzeichnet, daß der Vertikalhub (s$_T$) der unteren Drahtabführung (37, 38, 39) in der Schlittenführung (41) um einen kleinen Betrag größer als die Höhe (h) des als Palette (24) ausgebildeten auf den Aufspanntisch (30) aufgesetzten Werkstückauflage-Elements ist.

5. Funkenerosionsmaschine nach einem der Ansprüche 1 bis 3, dadurch gekennzeichnet, daß der horizontale Drahtführungsschacht (39) einen Durchbruch (40) im Maschinenbett (1) durchdringt, dessen Höhe dem größten vertikalen Verstellhub (s$_T$) und dessen Länge dem größten Verstellweg in der X-Achse entspricht.

6. Funkenerosionsmaschine nach einem der Ansprüche 1 bis 3, dadurch gekennzeichnet, daß der horizontale Drahtführungsschacht (39) einen waagrecht verlaufenden Durchbruch (42) in der auf dem Maschinenbett (1) mittels der Führungen (11, 12) verfahrbaren Vorschubeinheit (31) durchdringt und in den Innenraum der auf diese aufgesetzten Palette (25) mit dem Werkstück (W) mit seiner Drahtführungsdüse (37) hineinragt.

7. Funkenerosionsmaschine nach Anspruch 6, dadurch gekennzeichnet, daß die Palette (25) in der die X-Achse schneidenden Stirnwandung einen Durchbruch (21) für die Drahtführungsdüse (37) aufweist.

8. Funkenerosionsmaschine nach einem der Ansprüche 1 bis 3, dadurch gekennzeichnet, daß der horizontale Drahtführungsschacht (39) einen waagrecht verlaufenden Durchbruch (27) in der in X-Richtung verlaufenden Wandfläche einer auf den Aufspanntisch (30) oder die Vorschubeinheit (31) aufgesetzten Palette (28) mit dem Werkstück (W) durchdringt, die in ihrer Stirnfläche (22) einen senkrechten Druchbruch (26) oder in ihrer X-Richtung verlaufenden Wandfläche einen senkrechten Durchbruch (23) für das Durchtreten der unteren Drahtführungsdüse (37) beim Aufschieben der Palette (28) in X-oder Y-Richtung aufweist.

9. Funkenerosionsmaschine nach einem der Ansprüche 1 bis 8, dadurch gekennzeichnet, daß der Aufspanntisch (30) bzw. die Vorschubeinheit (31) mit Aufnahmeplätzen für wenigstens zwei Paletten ($P_1$, $P_2$) für Werkstücke (W) versehen ist, die in Richtung der X-oder der Y-Achse aufschiebbar sind.

10. Funkenerosionsmaschine nach Anspruch 9, dadurch gekennzeichnet, daß die Aufnahmeplätze vom Zubringer einer oder mehrerer Palettenwechselvorrichtungen (PW) zum Zu-und/oder Rückführen in X-oder Y-Richtung mit Paletten beschickbar sind.

11. Funkenerosionsmaschine nach Anspruch 9, dadurch gekennzeichnet, daß die Paletten-Aufnahmeplätze mittels mit Greifern versehenen Zu-und Abführungsvorrichtungen mit Paletten ($P_1$, $P_2$, P..) von oben beschickbar sind.

0 261 547

Fig. 1

Fig. 2

Fig. 3

Fig. 4

4175

Fig. 5

Fig. 7

Fig. 8

Fig. 6

Fig. 9

Fig. 10

Fig. 11

4175